# EUROPÄISCHE PATENTSCHRIFT

(11) **EP 1 979 790 B1**
(45) Veröffentlichungstag und Bekanntmachung des Hinweises auf die Patenterteilung: **23.11.2011**
(21) Anmeldenummer: 07703840.4
(22) Anmeldetag: 12.01.2007
(51) Int. Cl.: G05B 19/042, H02J 7/14

(54) **VERFAHREN UND VORRICHTUNG ZUR ADRESSVERGABE IN EINEM SYSTEM MIT MEHREREN PARALLEL ANGEORDNETEN GENERATOREINHEITEN**
METHOD AND DEVICE FOR ASSIGNING ADDRESSES IN A SYSTEM COMPRISING SEVERAL GENERATOR UNITS ARRANGED IN PARALLEL
PROCÉDÉ ET DISPOSITIF D'ATTRIBUTION D'ADRESSES DANS UN SYSTÈME COMPORTANT PLUSIEURS UNITÉS DE GÉNÉRATEUR DISPOSÉES DE FAÇON PARALLÈLE

(30) Priorität: 16.01.2006 DE 102006001983
(43) Veröffentlichungstag der Anmeldung: 15.10.2008
(73) Patentinhaber: Robert Bosch GmbH, 70442 Stuttgart (DE)
(72) Erfinder: SUELZLE, Helmut, 71691 Freiberg (DE); PEUSER, Thomas, 71636 Ludwigsburg (DE)
(86) Internationale Anmeldenummer: PCT/EP2007/050303
(87) Internationale Veröffentlichungsnummer: WO 2007/082848

(56) Entgegenhaltungen:
- EP-A- 0 680 232
- EP-A- 1 037 126
- DE-A1- 4 108 861
- DE-A1- 4 214 644
- DE-A1- 19 750 470

## Beschreibung

Die Erfindung betrifft ein Verfahren und eine Vorrichtung zur Adressvergabe in einem System mit mehreren parallel zueinander angeordneten Generatoreinheiten. Mittels derartig parallel geschalteter Generatoreinheiten kann beispielsweise in einem Kraftfahrzeug die Versorgungsspannung für die Verbraucher des Bordnetzes bereitgestellt werden.

### Stand der Technik

Es ist bereits bekannt, das elektrische Bordnetz eines Kraftfahrzeugs unter Verwendung eines Generators zu versorgen.

Weiterhin ist es bereits bekannt, das Bordnetz bestimmter Fahrzeuge, beispielsweise von Sicherheitsfahrzeugen, Rettungsfahrzeugen und Nutzfahrzeugen, unter Verwendung von mindestens zwei Generatoren mit Energie zu versorgen, um den geforderten Leistungsbedarf und/oder die geforderte Zuverlässigkeit der elektrischen Versorgung gewährleisten zu können.

Der Verschleiß und damit auch die Lebensdauer eines Generators hängt von mehreren Faktoren ab. Einer dieser Faktoren ist seine elektrische Auslastung. Je größer die elektrische Auslastung eines Generators ist; desto größer ist sein Verschleiß und desto niedriger ist seine restliche Lebensdauer. Es ist deshalb wünschenswert, die Auslastung der verwendeten Generatoren nach anwendungsspezifischen Strategien steuern zu können. Anwendungsspezifische Strategien sind beispielsweise eine gleichmäßige Auslastung oder eine sehr einseitige Verteilung der Auslastung.

In der DE 10 2005 12 270.1 sind ein Verfahren und eine Vorrichtung zur Bereitstellung der Versorgungsspannung für die Verbraucher eines Fahrzeug-Bordnetzes unter Verwendung mehrerer Generatoren beschrieben. Jedem der Generatoren ist eine mindestens einen Endstufentransistor aufweisende Regeleinheit zugeordnet. Um den Auslastungsgrad der Generatoren in Übereinstimmung zu bringen, wird in einer der Regeleinheiten ein impulsbreitenmoduliertes Steuersignal oder ein daraus abgeleitetes, das Tastverhältnis des impulsbreitenmodulierten Signals beschreibendes Steuersignal gebildet und den Endstufentransistoren aller Regeleinheiten zugeführt.

Weiterhin ist aus der DE 41 08 861 A1 eine Einrichtung mit parallel geschalteten Generatoren bekannt. Bei dieser bekannten Einrichtung ist jedem der Generatoren ein Spannungsregler zugeordnet. Weiterhin weist die bekannte Einrichtung mindestens eine Batterie auf, deren einer Anschluss über einen Zündschalter mit dem Spannungsregler verbindbar ist. Ferner ist eine Ladekontrolleinrichtung vorgesehen, die mit dem Zündschalter und den Spannungsreglern in Verbindung steht und über ein Schaltmittel mit dem vorzugsweise auf Masse liegenden negativen Anschluss der Batterie verbindbar ist. Zwischen der Ladekontrolleinrichtung, den Spannungsreglern und dem genannten Schaltmittel liegt eine Schaltungsanordnung mit mehreren in einer Richtung leitenden und in einer Richtung sperrenden Bauelementen. Durch diese bekannte Einrichtung soll erreicht werden, dass durch den Einsatz zweier Generatoren eine hohe elektrische Leistung erzeugt werden kann und dass mit einer einzigen Anzeige, beispielsweise einer Ladekontrolllampe, auftretende Fehler in einem der beiden Generator-Spannungsregler-Systeme angezeigt werden können, wobei das andere Generator-Spannungsregler-System problemlos weiterarbeiten kann.

Aus der DE 41 08 861 A1 ist eine Einrichtung zur Spannungsversorgung in einem Fahrzeug mit wenigstens zwei parallel geschalteten Generatoren bekannt. Die Generatoren sind dabei so verschaltet, dass zusätzlich zur Parallelschaltung noch eine Schaltungsanordnung vorhanden ist, mittels derer eine Fehleranzeige möglich ist und das Auftreten eines Fehlers in einem der beiden Generatoren mit Hilfe der Ladekontrolllampe angezeigt wird.

Die DE 197 50 470 A1 zeigt Verfahren zur Adressierung von Baugruppensteuerungen einer Parkanlage für Kraftfahrzeuge, bei denen von einer zentralen Steuerung ein Startsignal an eine erste Baugruppensteuerung abgegeben wird und diese dadurch adressiert. Die adressierte erste Baugruppensteuerung leitet nach ihrer Adressierung ihre Adresse mit einem entsprechenden Adressensignal an die folgende noch unadressierte Baugruppensteuerung weiter und adressiert diese ihrerseits. Das Verfahren wird so lange fortgesetzt, bis alle Baugruppen adressiert sind.

### Vorteile der Erfindung

Ein Verfahren mit den im Patentanspruch 1 angegebenen Merkmalen und eine Vorrichtung mit den im Patentanspruch 6 angegebenen Merkmalen weisen demgegenüber den Vorteil auf, dass die zum Gesamtsystem gehörigen einzelnen Generatoreinheiten jeweils eine eigene individuelle Adresse aufweisen. Aufgrund dieser eigenen individuellen Adresse sind sie unterscheidbar und können bei Bedarf individuell angesprochen werden. Diese individuelle Ansprache kann durch ein Steuergerät erfolgen, das mit den Generatoreinheiten über einen Datenbus verbunden ist. Beispielsweise richtet das Steuergerät eine Diagnoseanfrage an eine der Generatoreinheiten. Diese antwortet dem Steuergerät, indem sie ihm für die Diagnose relevante Daten zusammen mit der individuellen Adresse zurücksendet.

Ein besonderer Vorteil der Erfindung besteht darin, dass es zur Adressvergabe keiner externen Codierung und auch keiner externen Beschaltung bedarf, die beispielsweise bereits beim Aufbau der Schaltung vorgegeben werden müsste. Bei der vorliegenden Erfindung ordnen sich die Generatoreinheiten nach dem Empfang eines Startsignals selbst und automatisch jeweils eine individuelle Adresse zu. Dies geschieht dadurch, dass die erste Generatoreinheit nach dem Empfang eines Startsignals und eines an ihrem Steuersignaleingang anliegenden Steuersignals s3 sich selbst eine individuelle Adresse zuordnet und ein erstes Kennungssignal an ihrem Steuersignalausgang ausgibt, und die weiteren Generatoreinheiten jeweils ein am Steuersignalausgang einer ihr vorgeschalteten Generatoreinheit ausgegebenes Kennungssignal empfangen und sich selbst ei-ne vom jeweils empfangenen Kennungssignal abhängige individuelle Adresse zuordnen.

Eine einfach zu realisierende Ausgestaltung sieht vor, dem Steuersignaleingang der ersten Generatoreinheit als Steuersignal s3 einen vorgegebenen Spannungspegel zuzuführen.

Anhand dieses vorgegebenen Spannungspegels, welcher ausschließlich der ersten Generatoreinheit zugeführt wird, erkennt die erste Generatoreinheit, dass sie die Aufgabe hat, im Rahmen des Parallelbetriebes der Generatoreinheiten Masterfunktion zu übernehmen. Weiterhin ordnet sich die erste Generatoreinheit nach dem Empfang des vorgegebenen Spannungspegels selbst ihre individuelle Adresse zu.

Gemäß den Merkmalen der Patentansprüche 4 und 5 übermitteln die Generatoreinheiten ihre individuelle Adresse jeweils über einen Datenbus an ein Steuergerät. Dies kann automatisch erfolgen, nachdem die jeweilige Generatoreinheit oder nachdem alle Generatoreinheiten sich selbst ihre individuelle Adresse zugeordnet haben. Alternativ dazu kann das Steuergerät nach Ablauf einer vorgegebenen Zeitspanne nach dem Auftreten des Startsignals automatisch ein Anfragesignal über den Datenbus ausgeben, das die Generatoreinheiten empfangen und entsprechend beantworten.

Ist dem Steuergerät durch diese Adressenübermittlung bekannt, wie viele Generatoreinheiten für den Parallelbetrieb zur Verfügung stehen und welche Adresse jeder dieser Generatoreinheiten zugeordnet ist, dann kann das Steuergerät diese Kenntnisse im späteren Betrieb dazu verwenden, jede der Generatoreinheiten über den Datenbus individuell zu adressieren und der jeweiligen Generatoreinheit Anfragen oder Befehle zu übermitteln oder von der jeweiligen Generatoreinheit Daten abzurufen.

Weitere vorteilhafte Eigenschaften der Erfindung ergeben sich aus deren beispielhafter Erläuterung anhand der Figur.

### Zeichnung

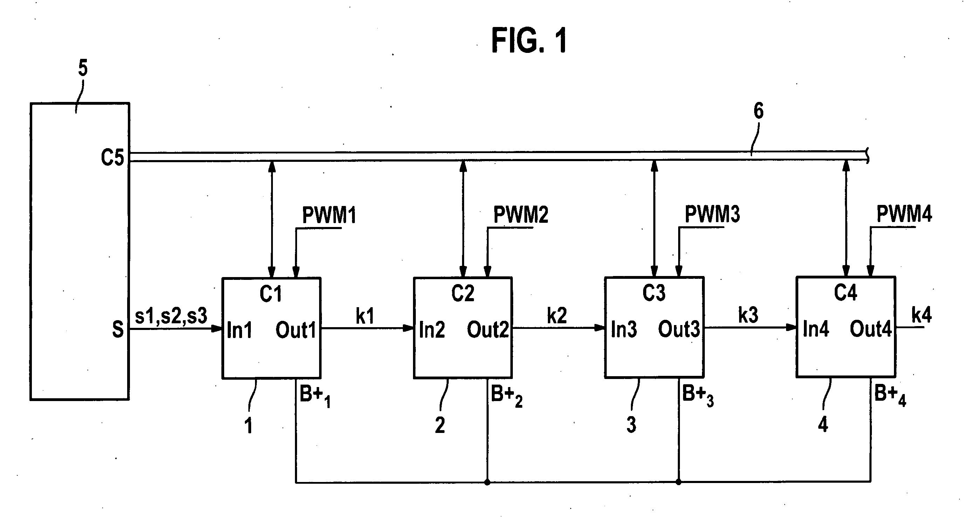

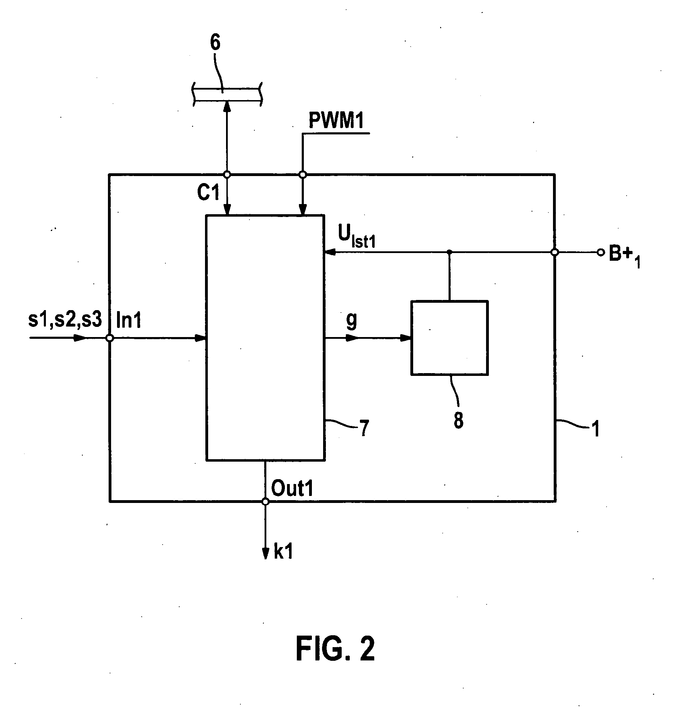

Die Figur 1 zeigt eine Blockdarstellung zur Erläuterung der erfindungsgemäßen Adressvorgabe. Die Figur 2 zeigt eine detailliertere Darstellung der ersten Generatoreinheit 1 von Figur 1.

### Beschreibung

Die Figur 1 zeigt eine Blockdarstellung zur Erläuterung der erfindungsgemäßen Adressvergabe.

In dieser Blockdarstellung sind eine erste Generatoreinheit 1, eine zweite Generatoreinheit 2, eine dritte Generatoreinheit 3 und eine vierte Generatoreinheit 4 entialten. Diese Generatoreinheiten sind bezüglich ihrer Funktion, die in der Bereitstellung einer Versorgungsgleichspannung für die Verbraucher eines Fahrzeug-Bordnetzes besteht, parallel zueinander geschaltet.

Der ersten Generatoreinheit 1 wird ein pulsbreitenmoduliertes Ansteuersignale PWM1, der zweiten Generatoreinheit 2 ein pulsbreitenmoduliertes Ansteuersignal PWM2, der dritten Generatoreinheit 3 ein pulsbreitenmoduliertes Ansteuersignal PWM3 und der vierten Generatoreinheit 4 ein pulsbreitenmoduliertes Ansteuersignal PWM4 zugeführt. Diese pulsbreitenmodulierte Signale, die von einer in der Figur 1 nicht dargestellten Signalquelle zur Verfügung gestellt werden, werden von einem Regler der jeweiligen Generatoreinheit in Generatorsteuersignale umgesetzt und dem Generator der jeweiligen Generatoreinheit zugeführt.

Dieser Generator stellt in Abhängigkeit von dem ihm zugeführten Generatorsteuersignal an seinem Ausgang einen Spannungsistwert zur Verfügung, der in Form einer positiven Versorgungsspannung am Spannungsversorgungsausgang der jeweiligen Generatoreinheit vorliegt.

Wie aus der Figur 1 ersichtlich ist, liegen an den Spannungsversorgungsausgängen der Generatoreinheiten positive Versorgungsspannungen B+₁, B+₂, B+₃ und B+₄ an. Da diese Spannungsversorgungsausgänge miteinander verbunden sind, ist die insgesamt bereitgestellte Versorgungsspannung aus den von den Generatoreinheiten 1, 2, 3 und 4 bereitgestellten Versorgungsspannungen zusammengesetzt. Durch diese Parallelschaltung mehrerer Generatoreinheiten ist gewährleistet, dass der im Betrieb geforderte Leistungsbedarf und die geforderte Zuverlässigkeit der Spannungsversorgung der Verbraucher eines Fahrzeugbordnetzes gegeben ist.

Im Betrieb der in der Figur 1 gezeigten Vorrichtung tritt ein Verschleiß der Generatoreinheiten bzw. Generatoren auf. Aus diesem Grund ist es von hoher Wichtigkeit, die einzelnen Generatoren zu überwachen, um Informationen über den Zustand der Generatoren zur Verfügung zu haben. Diese Informationen bestehen beispielsweise darin, dass ein Generator ausgefallen ist, dass eine Übertemperatur vorliegt, dass ein Generator nicht mehr dreht, usw.. Wenn es notwendig ist, kann aufgrund dieser Informationen ein Generator ausgetauscht werden, um die gewünschte Spannungsversorgung weiterhin zu gewährleisten.

Zum Zwecke dieser Überwachung bzw. Diagnose werden den einzelnen Generatoreinheiten während des Parallelbetriebes von einem Steuergerät 5 über dessen Datenschnittstelle C5 und einen Datenbus 6 Anfragesignale zugeführt. Als Antwort auf diese Anfragesignale übermittelt die jeweilige Generatoreinheit über den Datenbus 6 Daten an das Steuergerät, die den Zustand des Generators der jeweiligen Generatoreinheit veranschaulichen.

Bei dieser Übertragung der Anfragesignale an die jeweilige Generatoreinheit und bei der Übertragung der den Generatorzustand beschreibenden Daten werden die genannten Nutzdaten zusammen mit einer individuellen Adresse übertragen, die die jeweilige Generatoreinheit und damit auch den jeweiligen Generator spezifiziert.

Diese individuellen Adressen der Generatoreinheiten werden bei der vorliegenden Erfindung wie folgt festgelegt bzw. vergeben:

Nach einem Startvorgang wird von einem Startsignalgeber, bei dem es sich bei dem in der Figur 1 gezeigten Ausführungsbeispiel um das Steuergerät 5 handelt, ein Startsignal s1 ausgegeben. Ein Startvorgang erfolgt beispielsweise nach jedem neuen Anlassen des Motors und auch nach jedem Reset des Systems, wie er beispielsweise nach dem Auftreten einer Fehlfunktion durchgeführt wird.

Das Startsignal s1 wird beim gezeigten Ausführungsbeispiel an einem Ausgang S des Steuergerätes 5 ausgegeben.

Dieses Startsignal s1 wird einem Steuersignaleingang In1 der ersten Generatoreinheit 1 zugeführt. Der Regler dieser Generatoreinheit 1 erkennt das Vorliegen des Startsignals s1 und überprüft danach, ob ihm über den Steuersignaleingang In1 ein Adressvergabestartsignal s2 und ein vorgegebenes Steuersignal s3 bereitgestellt werden. Beim Steuersignal s3 handelt es sich beispielsweise um einen bestimmten Spannungspegel. Liegen das Adressvergabestartsignal s2 und das Steuersignal s3 vor, dann ordnet der Regler sich selbst bzw. der ersten Generatoreinheit 1 eine individuelle Adresse zu, beispielsweise die Adresse "1". Weiterhin erkennt er anhand des Steuersignals s3, dass er für den nachfolgenden Parallelbetrieb der Generatoren Masterfunktionen ausüben soll. Ferner stellt er an einem Steuersignalausgang Out1 der ersten Generatoreinheit 1 ein Kennungssignal k1 zur Verfügung.

Dieses Kennungssignals k1 enthält eine Information darüber, dass es von einer Generatoreinheit stammt, die sich selbst die Adresse "1" zugeordnet hat, und wird an den Steuersignaleingang In2 der zweiten Generatoreinheit 2 angelegt. Der Regler dieser zweiten Generatoreinheit 2. erkennt das Vorliegen des Kennungssignals k1 und ordnet sich selbst bzw. der zweiten Generatoreinheit 2 eine individuelle Adresse zu, beispielsweise die Adresse "2". Weiterhin erkennt er anhand des Kennungssignals k1, dass er für den nachfolgenden Parallelbetrieb der Generatoren Slavefunktion übernehmen soll. Ferner stellt er an einem Steuersignalausgang Out2 der zweiten Generatoreinheit 2 ein Kennungssignal k2 zur Verfügung.

Dieses Kennungssignal k2 enthält eine Information darüber, dass es von einer Generatoreinheit stammt, die sich selbst die Adresse "2" zugeordnet hat, und wird an den Steuersignaleingang In3 der dritten Generatoreinheit 3 angelegt. Der Regler dieser dritten Generatoreinheit erkennt das Vorliegen des Kennungssignals k2 und ordnet sich selbst bzw. der dritten Generatoreinheit 3 eine individuelle Adresse zu, beispielsweise die Adresse "3". Weiterhin erkennt er anhand des Kennungssignals k2, dass er für den nachfolgenden Parallelbetrieb der Generatoren Slavefunktion übernehmen soll. Ferner stellt er an einem Steuersignalausgang Out3 der dritten Generatoreinheit 3 ein Kennungssignal k3 zur Verfügung.

Dieses Kennungssignal k3 enthält eine Information darüber, dass es von einer Generatoreinheit stammt, die sich selbst die Adresse "3" zugeordnet hat, und wird an den Steuersignaleingang In4 der vierten Generatoreinheit 4 angelegt. Der Regler dieser vierten Generatoreinheit erkennt das Vorliegen des Kennungssignals k3 und ordnet sich selbst bzw. der vierten Generatoreinheit 4 eine individuelle Adresse zu, beispielsweise die Adresse "4". Weiterhin erkennt er anhand des Kennungssignals k3, dass er für den nachfolgenden Parallelbetrieb der Generatoren Slavefunktion übernehmen soll. Ferner stellt er an einem Steuersignalausgang Out4 der vierten Generatoreinheit 4 ein Kennungssignal k4 zur Verfügung.

Diese Adressen der Generatoreinheiten werden von der jeweiligen Generatoreinheit über ihre jeweilige Datenschnittstelle C1, C2, C3, C4 und den Datenbus 6 an das Steuergerät 5 übermittelt und in diesem abgespeichert.

Die Übermittlung der Adressen von den Generatoreinheiten an das Steuergerät 5 kann automatisch dann erfolgen, wenn sich die jeweilige Generatoreinheit ihre individuelle Adresse zugeordnet hat, oder dann, wenn sich alle Generatoreinheiten ihre individuelle Adresse zugeordnet haben. Alternativ dazu ist es auch möglich, dass das Steuergerät 5 nach Ablauf einer vorgegebenen Zeitspanne nach dem Auftreten des Startsignals Abfragesignale über den Datenbus aussendet, auf welche die Generatoreinheiten reagieren, um dem Steuergerät zu signalisieren, dass sie vorhanden sind und welche Adresse sie jeweils haben.

Das Neuzordnen von Adressen nach jedem Anlassen des Motors und nach jedem System-Reset hat auch den Vorteil eines flexiblen Parallelbetriebes. Beispielsweise kann im Rahmen von Service-Arbeiten eine der Generatoreinheiten entfernt werden. Dieses Entfernen wird beim nächsten Neuzuordnen von Adressen erkannt, da nur noch drei Generatoreinheiten Adresssignale an das Steuergerät rückmelden. Es muss lediglich dafür gesorgt werden, dass die Generatoreinheiten bezüglich ihrer Steuersignaleingänge und -ausgänge eine Reihenschaltung bilden, die nicht unterbrochen sein darf. Beispielsweise muss bei einem Entfernen der dritten Generatoreinheit 3 der Steuersignalausgang Out2 der zweiten Generatoreinheit 2 mit dem Steuersignaleingang In4 der vierten Generatoreinheit 4 verbunden werden:

Weiterhin kann im Rahmen von Servicearbeiten auch eine zusätzliche Generatoreinheit angehängt werden. Dieses Anhängen wird beim nächsten Neuzuordnen von Adressen erkannt, da nunmehr fünf Generatoreinheiten Adresssignale an das Steuergerät rückmelden. Es muss lediglich dafür gesorgt werden, dass die Generatoreinheiten bezüglich ihrer Steuersignaleingänge und -ausgänge eine Reihenschaltung bilden, die nicht unterbrochen sein darf. Beispielsweise muss beim Anhängen einer fünften Generatoreinheit dafür Sorge getragen werden, dass der Steuersignalausgang Out4 der vierten Generatoreinheit 4 mit dem Steuersignaleinqang der fünften Generatoreinheit verbunden wird.

Beim vorstehend beschriebene Ausführungsbeispiel wurde das Startsignal s1 und das Adressvergabestartsignal s2 an einem Ausgang S des Steuergerätes 5 zur Verfügung gestellt. Gemäß einer anderen, nicht in der Figur 1 dargestellten Ausführungsform kann das Startsignal s1 auch von einem anderen Startsignalgeber bereitgestellt und der ersten Generatoreinheit 1 über deren Datenschnittstelle C1 zugeführt werden. Ebenso kann auch das Adressvergabestartsignal s2 der ersten Generatoreinheit 1 über die Datenschnittstelle C1 zugeführt werden.

Beim oben beschriebenen Ausführungsbeisplel liegt zum Zeitpunkt der Ausgabe des Startsignals an den Steuersignalausgängen Out1, Out2, Out3 und Out4 ein Low-Pegel-Signal vor. Alternativ dazu kann zum Zeitpunkt der Ausgabe des Startsignals an den Steuersignalausgängen Out1, Out2, Out3 und Out4 auch ein anderes Signal vorliegen, das jedoch vom Steuersignal s3 unterscheidbar sein muss.

Die Figur 2 zeigt eine detailliertere Darstellung der ersten Generatoreinheit 1 von Figur 1.

Die Generatoreinheit 1 weist einen Regler 7 und einen Generator 8 auf. Der Regler 7 ist in Form einer integrierten Schaltung realisiert oder in Form einer Schaltung mit diskreten Bauelementen aufgebaut.

Dem Regler 7 werden als Eingangssignale das am Steuersignaleingang In1 der Generatoreinheit 1 anliegenden Startsignal s1, das Adressvergabestartsignal s2 und das Steuersignal s3 zugeführt. Im späteren Parallelbetrieb werden dem Regler 7 die pulsbreitenmodulierte Ansteuersignale PWM1 zugeführt. Der Regler 7 identifiziert - angeregt durch das Startsignal s1 und das Adressvergabestartsignal s2 und mit Hilfe des am Steuersignaleingang In1 anliegenden Steuersignals s3 - sich selbst bzw. die Generatoreinheit 1 als Master und ordnet sich selbst eine individuelle Adresse zu. Weiterhin generiert er das Kennungssignal k1 und stellt dieses am Steuersignalausgang Out1 der ersten Generatoreinheit 1 zur Verfügung. Ferner erfolgt über die Datenschnittstelle C1 und den Datenbus 6 die Übermittlung der Adresse, die der Regler sich selbst bzw. der Generatoreinheit 1 zugeordnet hat, an das Steuergerät.

Weiterhin werden im späteren Parallelbetrieb über die Datenschnittstelle C1 Anfragesignale des Steuergerätes an den Regler 7 übertragen und die vom Steuergerät abgefragten Diagnosedaten vom Regler 7 über die Datenschnittstelle C1 und den Datenbus 6 an das Steuergerät übertragen.

Ferner stellt der Regler 7 im späteren Parallelbetrieb dem Generator 8 Generatorsteuersignale g zur Verfügung. Der Generator stellt als Reaktion auf diese Generatorsteuersignale g an einem Ausgang einen Gleichspannungsistwert U_{Ist1} zur Verfügung. Dieser wird an den Regler 7 zurückgeführt und dort im Sinne eines Regelvorganges zur Ermittlung neuer Generatorsteuersignale g verwendet. Weiterhin wird der Gleichspannungsistwert an einem Ausgang der ersten Generatoreinheit als positive Versorgungsgleichspannung B+₁ zur Verfügung gestellt.

Weiterhin gibt der Regler 7 im Parallelbetrieb auf einem seiner Anschlüsse, vorzugsweise über seinen Anschluss Out1, ein Signal aus, das den Auslastungsgrad des Generators 8 beschreibt.

Der Aufbau der Generatoreinheiten 2, 3 und 4 stimmt mit dem Aufbau der Generatoreinheit 1 überein, so dass beim gezeigten Ausführungsbeispiel vier parallelgeschaltete Generatoreinheiten gleichen Aufbaus zur Bereitstellung der Versorgungsgleichspannung für die Verbraucher eines Kraftfahrzeugbordnetzes beitragen.

Diese Generatoreinheiten ordnen sich nach jedem Startvorgang jeweils selbst eine individuelle Adresse zu. Dabei ordnet sich zunächst die erste Generatoreinheit eine individuelle Adresse zu und gibt an ihrem Steuersignalausgang ein erstes Kennungssignal aus. Die weiteren Generatoreinheiten empfangen jeweils ein am Steuersignalausgang einer ihr vorgeschalteten Generatoreinheit ausgegebenes Kennungssignal und ordnen sich als Reaktion auf den Empfang dieses Kennungssignals eine vom jeweiligen Kennungssignal abhängige individuelle Adresse zu.

Beim oben beschriebenen Ausführungsbeispiel tragen vier parallelgeschaltete Generatoreinheiten zur Bereitstellung der Versorgungsgleichspannung bei. Alternativ dazu können auch insgesamt 2, 3, 5, 6 oder auch eine größere Anzahl von parallelgeschalteten Generatoreinheiten zur Bereitstellung der gewünschten Versorgungsgleichspannung verwendet werden.

Bei dem oben beschriebenen Ausführungsbeispiel enthält das Kennungssignal jeweils eine Information darüber, von welcher Generatoreinheit es stammt, und der Regler der das Kennungssignal empfangenden Generatoreinheit ordnet sich selbst eine individuelle Adresse zu, die vom empfangenen Kennungssignal abweicht, beispielsweise eine nächsthöhere Zahl.

Gemäß einer alternativen Ausführungsform enthält das Kennungssignal eine Information darüber, welche Adresse die das Kennungssignal empfangende Generatorsteuereinheit haben soll. Der Regler der das Kennungssignal empfangenden Generatorsteuereinheit ordnet in diesem Fall sich bzw. der das Kennungssignal empfangenden Generatoreinheit die von der das Kennungssignal ausgebenden Generatorsteuereinheit vorgegebene Adresse zu und stellt seinerseits am Ausgang ein neues Kennungssignal zur Verfügung, welches eine Information darüber enthält, welche Adresse die das neue Kennungssignal empfangende Generatorsteuersignal haben soll.

Beim oben beschriebenen Ausführungsbeispiel werden den Generatoreinheiten im Parallelbetrieb jeweils über einen separaten Eingang pulsbreitenmodulierte Steuersignale zugeführt. Alternativ dazu ist es auch möglich, die oben beschriebene Adressvergabe während einer Initialisierungsphase durchzuführen und nach Beendigung der Initialisierungsphase für den nachfolgenden Parallelbetrieb die Funktion der Steuersignaleingänge und Steuersignalausgänge zu ändern. So kann im Parallelbetrieb die Generatoreinheit 1 an ihrem Steuersignalausgang Out1 ein pulsbreitenmoduliertes Steuersignal ausgeben. Alle anderen Generatoreinheiten erhalten dieses Signal an ihren Steuersignaleingängen und geben es unverändert an ihren Steuersignalausgängen wieder aus. Dadurch kann der Auslastungsgrad der Generatoren in Übereinstimmung gebracht werden.

Weiterhin handelt es sich beim oben beschriebenen Ausführungsbeispiel bei den Signalen s1 und s2 um Signale, welche zu unterschiedlichen Zeitpunkten auftreten. Gemäß einer anderen Ausführungsform der Erfindung liegt nur ein einziges Startsignal vor, welches als Startsignal und zugleich als Adressvergabestartsignal dient.

## Patentansprüche

1. Verfahren zur Adressvergabe in einem System mit einer ersten Generatoreinheit und mindestens einer parallel zur ersten Generatoreinheit angeordneten weiteren Generatoreinheit, wobei jede der Generatoreinheiten einen Steuersignaleingang und einen Steuersignalausgang aufweist und wobei der Steuersignaleingang jeder weiteren Generatoreinheit jeweils mit dem Steuersignalausgang einer anderen der Generatoreinheiten verbunden ist, **dadurch gekennzeichnet, dass**
- die erste Generatoreinheit (1) nach dem Empfang eines Startsignals (s1) anhand eines an ihrem Steuersignaleingang (In1) anliegenden Steuersignals (s3) sich selbst eine individuelle Adresse zuordnet und ein erstes Kennungssignal (k1) an ihrem Steuersignalausgang (Out1) ausgibt, und
- die weiteren Generatoreinheiten (2,3,4) jeweils ein am Steuersignalausgang einer ihr vorgeschalteten Generatoreinheit ausgegebenes Kennungssignal (k1,k2,k3) empfangen und sich selbst eine vom jeweils empfangenen Kennungssignal abhängige individuelle Adresse zuordnen und dass die erste Generatoreinheit nach dem Empfang des Steuersignals (s3) sich selbst als Master für einen Parallelbetrieb der Generatoreinheiten identifiziert.

2. Verfahren nach Anspruch 1, **dadurch gekennzeichnet, dass** die Generatoreinheiten ihre individuelle Adresse über einen Datenbus an ein Steuergerät übermitteln.

3. Verfahren nach Anspruch 2, **dadurch gekennzeichnet, dass** die Generatoreinheiten ihre individuelle Adresse nach dem Empfang eines vom Steuergerät ausgegebenen Abfragesignals über den Datenbus an das Steuergerät übermitteln.

4. Verfahren nach Anspruch 1, 2 oder 3, **dadurch gekennzeichnet, dass** das dem Steuersignaleingang der ersten Generatoreinheit zugeführte Steuersignal (s3) einen vorgegebenen Spannungspegel aufweist.

5. Vorrichtung zur Durchführung eines Verfahrens nach einem der vorhergehenden Ansprüche, mit
- einer ersten Generatoreinheit (1) und
- mindestens einer parallel zur ersten Generatoreinheit angeordneten weiteren Generatoreinheit (2,3,4), wobei
- jede Generatoreinheit (1,2,3,4) einen Steuersignaleingang (In1, In2, In3, In4), einen Steuersignalausgang (Out1,Out2,Out3,Out4) und eine Datenschnittstelle (C1,C2,C3,C4) aufweist,
**dadurch gekennzeichnet, dass**
- die Steuersignaleingänge (In2,In3,In4) der weiteren Generatoreinheiten (2,3,4) jeweils mit dem Steuersignalausgang (Out1,Out2,Out3) einer ihr vorgeschalteten Generatoreinheit verbunden sind und dass der Regler dazu vorgesehen ist, die individuelle Adresse nach dem Empfang eines vom Steuergerät ausgegebenen Abfragesignals über den Datenbus an das Steuergerät zu übermitteln.

6. Vorrichtung nach Anspruch 5, **dadurch gekennzeichnet, dass** sie weiterhin einen Datenbus (6) aufweist, an welchen die Datenschnittstellen der Generatoreinheiten angeschlossen sind.

7. Vorrichtung nach Anspruch 6, **dadurch gekennzeichnet, dass** die Datenschnittstellen der Generatoreinheiten über den Datenbus mit einem Steuergerät (5) verbunden sind.

8. Vorrichtung nach Anspruch 7, **dadurch gekennzeichnet, dass** die Generatoreinheiten jeweils einen Regler und einen Generator aufweisen, die Selbstzuordnung der individuellen Adresse durch den Regler der jeweiligen Generatoreinheit erfolgt und der Regler dazu vorgesehen ist, die individuelle Adresse über den Datenbus an das Steuergerät zu übermitteln.

9. Vorrichtung nach einem der Ansprüche 5 - 8, **dadurch gekennzeichnet, dass** die parallel geschalteten Generatoreinheiten zur Bereitstellung der Versorgungsspannung für die Verbraucher eines Fahrzeug-Bordnetzes vorgesehen sind.

## Claims

1. Method for address allocation in a system having a first generator unit and at least one further generator unit arranged in parallel with the first generator unit, wherein each of the generator units has a control signal input and a control signal output and wherein the control signal input of each further generator unit is respectively connected to the control signal output of another of the generator units, **characterized in that**
- the first generator unit (1), having received a start signal (s1), uses a control signal (s3) applied to its control signal input (In1) to allocate itself an individual address and outputs the first identifier signal (k1) at its control signal output (Out1), and
- the further generator units (2, 3, 4) each receive an identifier signal (k1, k2, k3), which is output at the control signal output of a generator unit connected upstream of them, and allocate themselves an individual address which is dependent on the respectively received identifier signal, and that the first generator unit, having received the control signal (s3), identifies itself as a master for parallel operation of the generator units.

2. Method according to Claim 1, **characterized in that** the generator units transmit their individual address via a data bus to a controller.

3. Method according to Claim 2, **characterized in that** the generator units transmit their individual address via the data bus to the controller after reception of an interrogation signal which is output by the controller.

4. Method according to Claim 1, 2 or 3, **characterized in that** the control signal (s3) supplied to the control signal input of the first generator unit has a prescribed voltage level.

5. Apparatus for carrying out a method according to one of the preceding claims, having
- a first generator unit (1) and
- at least one further generator unit (2, 3, 4) arranged in parallel with the first generator unit, wherein
- each generator unit (1, 2, 3, 4) has a control signal input (In1, In2, In3, In4), a control signal output (Out1, Out2, Out3, Out4) and a data interface (C1, C2, C3, C4),
**characterized in that**
- the control signal inputs (In2, In3, In4) of the further generator units (2, 3, 4) are each connected to the control signal output (Out1, Out2, Out3) of a generator unit connected upstream of them and **in that** the regulator is provided for the purpose of transmitting the individual address via the data bus to the controller after the reception of an interrogation signal which is output by the controller.

6. Apparatus according to Claim 5, **characterized in that** it also has a data bus (6) to which the data interfaces of the generator units are connected.

7. Apparatus according to Claim 6, **characterized in that** the data interfaces of the generator units are connected to a controller (5) via the data bus.

8. Apparatus according to Claim 7, **characterized in that** the generator units each have a regulator and a generator, the self-allocation of the individual address is performed by the regulator of the respective generator unit, and the regulator is provided for the purpose of transmitting the individual address via the data bus to the controller.

9. Apparatus according to one of Claims 5-8, **characterized in that** the parallel-connected generator units are provided for the purpose of providing the supply voltage for the loads in a vehicle electrical system.

## Revendications

1. Procédé d'attribution d'adresse dans un système comprenant une première unité génératrice et au moins une unité génératrice supplémentaire disposée en parallèle avec la première unité génératrice, chacune des unités génératrices présentant une entrée de signal de commande et une sortie de signal de commande et l'entrée de signal de commande de chaque unité génératrice supplémentaire étant à chaque fois reliée avec la sortie de signal de commande d'une autre des unités génératrices, **caractérisé en ce que**
- la première unité génératrice (1), après la réception d'un signal de démarrage (s1), s'attribue elle-même une adresse individuelle au moyen d'un signal de commande (s3) appliqué à son entrée de signal de commande (In1) et délivre un premier signal d'identification (k1) à sa sortie de signal de commande (Out1), et
- les unités génératrices supplémentaires (2, 3, 4) reçoivent respectivement un signal d'identification (k1, k2, k3) délivré sur la sortie de signal de commande d'une unité génératrice qui est branchée avant elles et s'attribuent elles-mêmes une adresse individuelle dépendante du signal d'identification respectif reçu, et **en ce que** la première unité génératrice, après la réception du signal de commande (s3), s'identifie elle-même comme maître pour un fonctionnement en parallèle des unités génératrices.

2. Procédé selon la revendication 1, **caractérisé en ce que** les unités génératrices communiquent leur adresse individuelle à un contrôleur par le biais d'un bus de données.

3. Procédé selon la revendication 2, **caractérisé en ce que** les unités génératrices communiquent leur adresse individuelle au contrôleur par le biais du bus de données après la réception d'un signal d'interrogation délivré par le contrôleur.

4. Procédé selon la revendication 1, 2 ou 3, **caractérisé en ce que** le signal de commande (s3) acheminé à l'entrée de signal de commande de la première unité génératrice présente un niveau de tension prédéfini.

5. Dispositif pour mettre en oeuvre un procédé selon l'une des revendications précédentes, comprenant
- une première unité génératrice (1) et
- au moins une unité génératrice supplémentaire (2, 3, 4) disposée en parallèle avec la première unité génératrice,
- chacune des unités génératrices (1, 2, 3, 4) présentant une entrée de signal de commande (In1, In2, In3, In4), une sortie de signal de commande (Out1, Out2, Out3, Out4) et une interface de données (C1, C2, C3, C4),
**caractérisé en ce que**
- les entrées de signal de commande (In2, In3, In4) des unités génératrices supplémentaires (2, 3, 4) sont à chaque fois reliées avec la sortie de signal de commande (Out1, Out2, Out3) d'une unité génératrice qui est branchée avant elle et **en ce que** le régulateur est prévu pour communiquer l'adresse individuelle au contrôleur par le biais du bus de données après la réception d'un signal d'interrogation délivré par le contrôleur.

6. Dispositif selon la revendication 5, **caractérisé en ce qu'**il présente en outre un bus de données (6) auquel sont raccordées les interfaces de données des unités génératrices.

7. Dispositif selon la revendication 6, **caractérisé en ce que** les interfaces de données des unités génératrices sont reliées avec un contrôleur (5) par le biais du bus de données.

8. Dispositif selon la revendication 7, **caractérisé en ce que** les unités génératrices présentent à chaque fois un régulateur et un générateur, l'auto-attribution de l'adresse individuelle est réalisée par le régulateur de l'unité génératrice correspondante et le régulateur est prévu pour communiquer l'adresse individuelle au contrôleur par le biais du bus de données.

9. Dispositif selon l'une des revendications 5 à 8, **caractérisé en ce que** les unités génératrices branchées en parallèle sont prévues pour mettre à disposition la tension d'alimentation pour les charges du réseau de bord d'un véhicule.
